(19) Europäisches Patentamt
European Patent Office
Office européen des brevets

(11) **EP 2 128 579 B1**

(12) **EUROPEAN PATENT SPECIFICATION**

(45) Date of publication and mention
of the grant of the patent:
**01.08.2012 Bulletin 2012/31**

(51) Int Cl.:
**G01K 7/25** (2006.01)

(21) Application number: **08157059.0**

(22) Date of filing: **28.05.2008**

(54) **Arrangement for linearizing a non-linear sensor**

Anordnung zur Ausrichtung eines nicht-ausgerichteten Sensors

Agencement pour la linéarisation d'un capteur non linéaire

(84) Designated Contracting States:
**DE FR GB**

(43) Date of publication of application:
**02.12.2009 Bulletin 2009/49**

(73) Proprietor: **Sensata Technologies, Inc.**
**Attleboro, MA 02703 (US)**

(72) Inventors:
• **Tiek, Tim**
**7533 CB, Enschede (NL)**
• **Gennissen, Paulus Thomas Johannes**
**7535 DG, Enschede (NL)**

(74) Representative: **Ketelaars, Maarten F.J.M.**
**Nederlandsch Octrooibureau**
**Postbus 29720**
**2502 LS Den Haag (NL)**

(56) References cited:
**WO-A-2006/135977    US-A- 5 116 136**

• **JAIN L C: "THERMISTOR-BASED LINEAR TEMPERATURE-TO-VOLTAGE CONVERTER" MEASUREMENT, INSTITUTE OF MEASUREMENT AND CONTROL. LONDON, GB, vol. 7, no. 3, 1 July 1989 (1989-07-01), page 132/133, XP000113447 ISSN: 0263-2241**

**Description**

**Field of the invention**

The invention relates to an arrangement for linearizing a non-linear sensor. More particularly, an arrangement for converting the output of a sensor, whose output follows a non-linear response curve, to an output of linearized readings. Even more particular, the invention relates to an arrangement for linearizing an NTC thermistor over a very wide temperature range, i.e. -40°C - 200°C.

**Background of the invention**

To display the value of a physical parameter, such as temperature, pressure, etc., it is necessary to employ a transducer that responds to that parameter by changing an electrically-detectable characteristic. Such characteristics include temperature-sensitive resistance variations and thermocouple voltages. Most sensors display significant nonlinearities in their outputs, i.e. sensor output voltages or currents deviate appreciably from a linear relationship with the input phenomenon being monitored. It is well known that thermistors and thermocouples exhibit nonlinear output increments in response to linear temperature increments.

A system for linearizing a non-linear sensor output is known from US5274577. A processor is described for monitoring a sensor whose output signal follows a non linear curve in response to a linear change in a monitored phenomenon. The processor converts the output signal to a linear output value proportional to the phenomenon monitored. The non-linear sensor signal is linearized after digitizing.

Furthermore, a variety of classes of analog linearizing devices exist for correcting non-linearity over input ranges. Analog linearizing devices provide adequate accuracy for a limited number of sensor types over restricted input ranges. The known analog linearizing devices store the required correction information in the values of resistors which set break points between various segments of the response curve and the slope/offset peculiar to each segment of the response curve. Analog linearizers typically have eight or fewer segments, and are capable of linearizing most temperature sensing elements, within a few degrees, over commonly-experienced input ranges.

US 6099163 discloses a circuit for correcting a non-linear output of an electronic temperature sensor.

US 4106341 discloses an arrangement for linearizing a non-linear sensor, with a non-linear sensor, and an analog conversion unit with a pn-junction. More specifically, this document discloses a linearized thermistor. An electrical circuit is proposed having a forwardly biased decoder diode, having an exponential current-voltage characteristic matching the exponentioal resistance-temperature characteristic of the thermistor, such that the resultant voltage across the diode in a linear function of the sensed temperature.

"Thermistor-Based linear temperature-to-voltage converter" my Jain L.C., Measurement, Institute of measurement and control. London, GB, vol. 7, no. 3, 1 July 1989, page 132/133, and US-A-5116136 discloses an arrangement for linearizing a non-linear sensor by using a logarithmical amplifier. The logarithmical amplifier performs an amplification wherein the output voltage is K times the natural log of the input voltage.

WO2006/135977 discloses a method for fitting the output of a sensor to a predetermined relationship. A microprocessor reads the voltage across a thermistor via an AD converter. A number of bias resistances is under control of the microprocessor connected in series with the thermistor. The effective bias resistance is changed from moment to moment. The microprocessor reads one at a time the voltage across the thermistor associated with one of the bias resistances. The microprocessor forms a weighted sum of the read voltages. When using any of the bias resistances, the voltage across the thermistor supplied to the AD converter has a characteristic that follows a curve in response to a linear change in temperature in the disclosed temperature range, wherein the curve is non-linear.

$CO_2$ Air Conditioning (A/C) systems can support both "cooling" and "heat pump" functionality. Heat pump functionality allows the A/C system to heat instead of only cooling the interior of for example a car. In "cooling" mode, the radiator cools the $CO_2$ in the A/C system. The A/C system will be most efficient when the temperature of the $CO_2$ in "cooling" mode is approximately 150°C. In "heat pump" mode, the radiator has to heat-up the $CO_2$ in the A/C system. The lower the radiator temperature the more efficient the system will be. However, the radiator will only work properly when the temperature of the $CO_2$ at the inlet of the radiator is above 0°C. As soon as the temperature is below 0°C, ice will be formed on the radiator, resulting in degradation of the heating functionality of the radiator. Therefore, in $CO_2$ A/C systems, a temperature sensor is needed, which can accurately measure temperature around both 0°C and 150°C. Furthermore, it is desired that in both temperature areas the temperature sensitivity of the output of the sensor is linear and in the same range.

**Summary of the invention**

It is an object of the present invention to provide an improved arrangement for linearizing non-linear sensor outputs.

It is another object of the invention to provide a high accuracy, wide-range linearization arrangement for non-linear sensor outputs that allows to have one temperature sensor to measure accurately low and high temperatures allowing a CO2 A/C system to include both cooling and heat pump functionality.

It is still another object of the invention to provide a linearizing arrangement that provides a digital output signal having a response curve which slope is substantially constant and without discontinuities across the whole range of the phenomenon.

According to the present invention, an arrangement is provided as described in claim 1.

An arrangement is described for linearizing a non-linear sensor whose output signal follows a non-linear curve in response to a linear change in a monitored phenomenon in a predefined range. The non-linear curve can be approximated by an exponential or logarithmic function. The arrangement includes an analog conversion unit to convert logarithmically or exponentially the signal from the non-linear sensor to obtain a converted signal. Furthermore, the arrangement includes an AD-converter having a sensor signal input to receive the converted signal and to digitize the converted signal to obtain a digital signal value. The arrangement converts the signal from the sensor, which has a curve with a slope that extremely varies along the range of the phenomenon into a converted signal which has a curve with a slope that is within a limited range. This limited range allows us to digitize the converted signal with a normal 16 bit AD-converter with a high accuracy over the whole temperature range.

According to an embodiment, the conversion unit comprises a pn-junction and the conversion circuit is arranged to measure the current through the non-linear sensor and to exchange said current into a current through the pn-junction. The current through the pn-junction having a linear relationship with the current through the non-linear sensor and the converted signal is the voltage across the pn-junction. In this embodiment the current through the non-linear sensor follows an exponential curve and the pn-junction converts the current into a voltage, which conversion is a logarithmic function. In this way the exponential curve of the non-linear sensor is transformed into a curve which is more or less linear.

According to the main embodiment, the arrangement further comprises a first reference signal generator arranged to generate a first reference signal wherein the first reference signal corresponds to the voltage across a pn-junction. The pn-junction matches the pn-junction of the conversion unit. A first predefined current is fed through said pn-junction. The arrangement further comprises a second reference signal generator arranged to generate a second reference signal wherein the second reference signal corresponds to the voltage across a pn-junction. The pn-junction of the second reference signal generator matches the pn-junction of the conversion unit. A second predefined current is fed through said pn-junction. The AD-converter comprises a first reference signal input coupled to the first reference signal generator and a second reference signal input coupled to the second reference signal generator. The AD-converter is arranged to generate digital signal values corresponding to the voltage difference between the sensor signal input $V_{pn\_ntc}$ and the first reference signal input $V_{pn1}$ and the voltage difference between the second reference signal input $V_{pn2}$ and the first reference signal input $V_{pn1}$. In a further embodiment, the pn-junction of the converter and pn-junctions of the first and second reference signal generator are on the same die. These features are employed to reduce the temperature sensitivity of the saturation current of the pn-junction of the conversion unit in the digital signal values.

According to an embodiment, the AD-converter is further arranged to generate digital signal values corresponding to the voltage difference between the first reference signal input $V_{pn1}$ and the sensor signal input $V_{pn\_ntc}$ and the voltage difference between the first reference signal input $V_{pn1}$ and the second reference signal input $V_{pn2}$. These features enable us to eliminate drift in the differential AD-converter.

According to an embodiment, the arrangement further comprises a processing unit arranged for processing the digital signal values to obtain a value for the phenomenon. In an embodiment, the processing unit is arranged to perform the following equation:

$$ratio = \frac{\left(V_{pn\_ntc} - V_{pn1}\right)}{\left(V_{pn2} - V_{pn1}\right)}$$

wherein

ratio = a value indicative of the phenomenon,

$V_{pn\_ntc}$ - $V_{pn1}$ = a digital signal value corresponding to the difference between the sensor signal input $V_{pn\_ntc}$ and the first reference signal input $V_{pn1}$ ,and

$V_{pn2}$ - $V_{pn1}$ = a digital signal value corresponding to the difference between the second reference signal input $V_{pn2}$ and the first reference signal input $V_{pn1}$. These features are employed to eliminate the temperature dependency of the pn-junctions and to provide a digital value that is insensitive for temperature variation of the pn-junctions.

According to an embodiment, the processing unit is arranged to calculate a value for a digital output signal representing the sensed phenomenon by applying to the value of *ratio* to a polynomial equation in the digital domain to further linearize the curvature of the digital output signal in response to a linear change in the phenomenon in said predefined range. These features help to reduce further the non-linearity in the digital signal due to a mismatch between the exponential curve of the non-linear sensor and the logarithmic I-V function of the pn-junction.

According to an embodiment, the non-linear sensor comprises a sensing element made of material which conductivity rises with increasing value for the phenomenon.

In a further embodiment, the non-linear sensor is an NTC thermistor. The present invention provides a solution to linearize the response of a non-linear enabling us to measure accurately temperature in a wide range i.e. -40 - 200°C with at least 3 to 5 bits per degree Celsius with inexpensive electronic circuitry, which could be made by a standardized process with standard components.

## Brief description of the drawings

The present invention will be discussed in more detail below, using exemplary embodiments, with reference to the attached drawings, in which

Fig. 1 shows a circuit diagram of an arrangement for linearizing a non-linear sensor according to the present invention;
Fig. 2 shows the non-linear characteristics of an NTC and a linearized signal Vpn_NTC; and
Fig. 3 shows the relation between the linearized signal Vpn_NTC and the temperature of the PN junction.

## Detailed description of exemplary embodiments

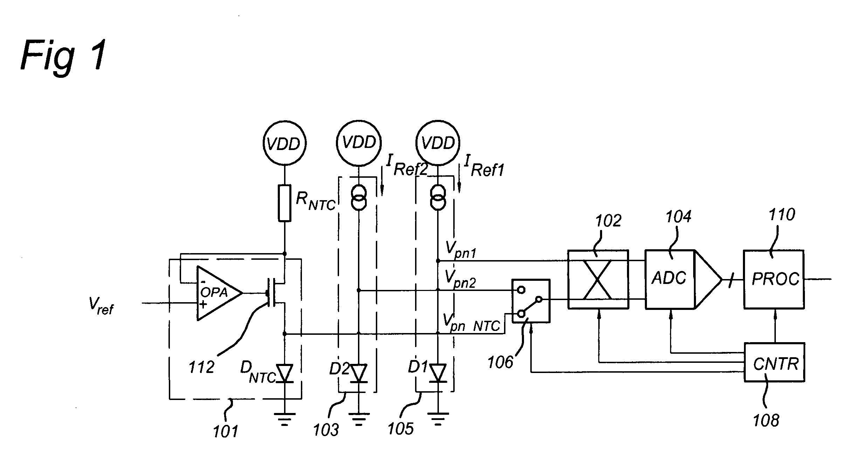

Figure 1 shows a circuit diagram of an arrangement for linearizing a non-linear sensor $R_{NTC}$. A non-linear sensor according to the present invention is a sensor that provides a signal that follows a non-linear curve in response to linear changes in a phenomenon. The non-linear sensor could be any transducer that responds to a phenomenon, such as temperature, pressure, air flow, etc, by changing an electrically-detectable characteristic. Such characteristics include thermocouple voltages and temperature-sensitive resistance variations. Non-linear sensors with a negative phenomenon coefficient comprise a sensing element made of a material which conductivity rises with increasing value for the phenomenon. Non-linear resistive sensors can be used in temperature sensors, gas sensors and humidity sensors. In the following description the non-linear sensor is a resistor $R_{NTC}$ with negative temperature coefficient (NTC).

In the embodiment shown in figure 1, the voltage across the $R_{NTC}$ is kept stable by means of an operational amplifier OPA. A reference voltage $V_{ref}$ is supplied to a non-inverting input of the operational amplifier OPA. The output signal of the operational amplifier will control a FET 112 in such a way, that the voltage at the inverting input of the operational amplifier will be similar to the reference voltage $V_{ref}$ at the non-inverting input of the operational amplifier OPA. In this way, the voltage across the NTC will be kept constant.

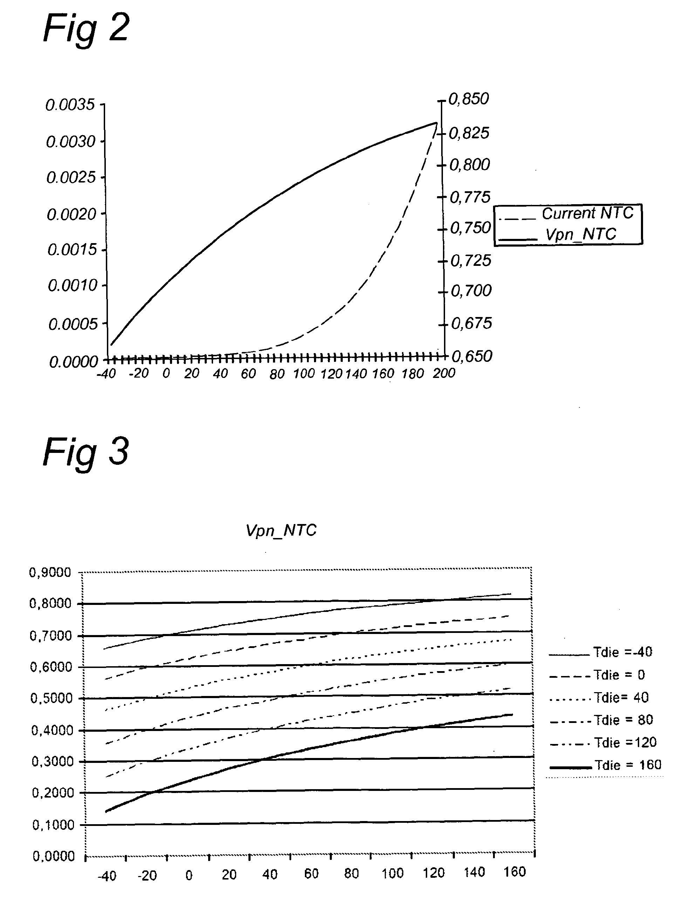

The current through $R_{NTC}$ is fed through a diode $D_{NTC}$. Figure 2 shows the relation of the current through $R_{NTC}$ and the temperature and the voltage across diode $D_{NTC}$ when the current through $R_{NTC}$ is fed through the diode $D_{NTC}$. The X-axis indicates the temperature, the left Y-axis indicates the current values and the right Y-axis indicates the voltage across the diode $D_{NTC}$. It can be seen that the current is not sensitive at low temperature and very sensitive at high temperature.

The voltage across the diode can be approximated by means of the following pn-junction equation:

$$V_{pn} = \frac{kT}{q}\ln(\frac{I}{I_s}) \qquad\qquad [1]$$

wherein:

$V_{pn}$ = voltage across the pn-junction,
k = Boltzmann's constant
q = the elementary charge
T = the absolute temperature of the pn-junction in kelvins
I = pn-junction current and
$I_s$ = the saturation current.

The operational amplifier OPA, FET 112 and diode $D_{NTC}$ form an analog conversion unit 101. The conversion unit 101 is arranged to measure the current through the non linear sensor, by means of an input formed by the connection to the NTC and to exchange said current received at said input into a current through the pn-junction of the diode $D_{NTC}$. In the embodiment shown in figure 1, the current through the pn-junction is similar to the current through the non linear sensor $R_{NTC}$. By means of a current-mirror, not shown and well known in the art, the current through the sensor can easily be multiplied by a predefined factor to obtain another current having a linear relationship with the current through the sensor. In this way, the current to be fed through the diode $D_{NTC}$ can be adapted into suitable current values.

The diode $D_{NTC}$ will convert in the analog signal domain the temperature characteristic of the current through $R_{NTC}$ into a converted signal which corresponds to the voltage $V_{pn\_ntc}$ across the pn-junction of the diode. By means of equation [1] a logarithmic conversion is applied on the current through the NTC. Figure 2 shows the result of the logarithmic conversion by means of equation [1] of the current through the non-linear sensor into the voltage across the pn-junction. The temperature characteristic of the voltage across $D_{NTC}$ is linearized with respect to the non-linear characteristic of the current though $R_{NTC}$.

The voltage across $D_{NTC}$ could be converted by means of an AD converter to obtain a digital signal value representative of the temperature. This voltage can easily be digitized by a simple 11 or 12 bit AD converter while still meeting the required resolution of 3 - 5 bits per degree Celsius along the whole temperature range. The digital samples could be processed further to improve the linearization.

By means of the conversion unit 101, the NTC current is amplified logarithmically opposite to its own nonlinear curve in the analog domain. This results in an analog signal that is close to linear and that can be digitized by a linear AD converter with much higher resolution per degree Celsius than the original non-linear signal having a linear relationship with the NTC current. The digitized signal obtained from the voltage $V_{pn\_ntc}$ could be used to measure temperature with sufficient accuracy in a large temperature range if the temperature of the pn-junction could be kept constant.

However, the logarithmic conversion by means of equation [1] comprises two temperature dependent parameters i.e. the absolute temperature of the pn-junction in Kelvin T and the saturation current $I_s$. The values of both parameters depends on the temperature of the die on which the diode is present. In operational conditions, the temperature of the die has a relationship with the environmental temperature. In a car, the environmental temperature of the sensor could be in a range of -20 - 30°C when starting the engine and could rise up to a range of 100 - 160°C when the engine is warmed up. Figure 3 shows the relation of the $V_{pn\_ntc}$ curve shown in figure 2 with respect to the temperature of the die. The X-axis indicates the temperature, the Y-axis indicates the voltage across the diode $D_{NTC}$. Shown are the curves that can be obtained when the temperature of the die $T_{die,}$ i.e. pn-junction of diode, is kept at a defined temperature. The amplitude of the curve shifts over the whole temperature range in dependence of the die temperature $T_{die}$.

To eliminate the temperature dependency due to the saturation current $I_s$, a first reference signal generator 105 is provided. In figure 1, the first reference signal generator 105 comprises a serial connection of a current source providing a predefined current $I_{Ref1}$ and a diode D1. The predefined current $I_{Ref1}$ provided by the current source is independent from the temperature variations and provides at each temperature in a predefined range of for example -40 - 200°C substantially the same current. The predefined current $I_{ref1}$ is fed through the diode D1.

The anode of the diode D1 is coupled to an input of a differential AD converter 104 to measure the voltage potential at the anode. In figure 1, the anode of diode $D_{NTC}$ is coupled to the other input of the differential AD converter 104. Furthermore, the cathode of both diodes $D_{NTC}$ and D1 are coupled to ground. The differential AD converter 104 measures the voltage difference between the voltage across diode $D_{NTC}$ being the sensor signal input $V_{pn\_ntc}$ and the voltage across diodeD1 being a first reference signal input $V_{pn1}$.

The diode D1 has a pn-junction which matches the pn-junction of diode $D_{NTC}$ such that the saturation currents of both pn-junctions have the same temperature dependency.

By subtracting the $V_{pn}$ voltages across the matched diodes $D_{NTC}$ and D1, the temperature dependency due to the saturation current is removed. This can be proved by the following equation:

$$\left(V_{pn\_ntc} - V_{pn1}\right) = \frac{kT}{q}\ln(\frac{I_{ntc}}{I_s}) - \frac{kT}{q}\ln(\frac{I_{ref1}}{I_s}) = \frac{kT}{q}\ln(\frac{I_{ntc}}{I_{ref1}}) \qquad [2]$$

wherein:

$V_{pn-ntc}$ = voltage across pn-junction $D_{ntc}$,
$V_{pn1}$ = voltage across pn-junction D1,
$I_{ntc}$ = current through pn-junction $D_{ntc}$, and
$I_{ref1}$ = current through pn-junction D1.

From equation [2] can be seen that the temperature dependency due to the saturation current $I_s$ is removed

and the temperature dependent parameter T still exists. By measuring the temperature of the die accurately, the variations of the voltage across the diodes due to parameter T could be compensated. According to the present invention, temperature dependent parameter T could be eliminated by providing a second reference signal generator 103. In figure 1, the second reference signal generator 103 comprises a serial connection of a current source providing a second predefined current $I_{Ref2}$ and a diode D2. The second predefined current $I_{Ref2}$ provided by the current source should be independent from temperature variations and provides at each temperature in a predefined range of for example -40 - 200°C substantially the same current. The predefined current $I_{ref2}$ is fed through the diode D2.

The anode of the diode D2 is coupled to an input of differential AD converter 104 to measure the voltage potential at the anode. Furthermore, the cathode of diode D2 is coupled to ground. The other input of differential AD converter 104 is coupled to the anode of diode D1. Differential AD converter 104 measures the voltage difference between the voltage across diode D2 being the second reference signal input $V_{pn2}$ and the voltage across diode D1 being a first reference signal input $V_{pn1}$.

The diode D2 has a pn-junction which matches the pn-junctions of diode $D_{NTC}$ and D1 such that the saturation currents of the pn-junctions have the same temperature dependency. The pn-junction of the converter 101, i.e. pn-junction of diode $D_{NTC}$, and the pn-junction of the first and second reference signal generator 105, 103 are preferably on the same die. In that case, the temperature of the pn-junctions will be substantially similar.

By subtracting the $V_{pn}$ voltages across the matched diodes D2 and D1, the temperature dependency due to the saturation current is eliminated from the difference signal as proved by equation [3].

$$\left(V_{pn2} - V_{pn1}\right) = \frac{kT}{q}\ln(\frac{I_{ref2}}{I_s}) - \frac{kT}{q}\ln(\frac{I_{ref1}}{I_s}) = \frac{kT}{q}\ln(\frac{I_{ref2}}{I_{ref1}}) \qquad [3]$$

wherein:

$V_{pn2}$ = voltage across pn-junction D2,
$V_{pn1}$ = voltage across pn-junction D1,
$I_{ref2}$ = current through pn-junction D2, and
$I_{ref1}$ = current through pn-junction D1.

The die temperature $T_{die}$ can easily be determined from the voltage difference ($V_{pn2}$ - $V_{pn1}$) as shown in equation [4]:

$$T_{die} = \left(V_{pn2} - V_{pn1}\right) \Big/ \frac{k}{q}\ln(\frac{I_{ref2}}{I_{ref1}}) \qquad [4]$$

wherein:

$V_{pn2}$ = voltage across pn-junction D2,
$V_{pn1}$ = voltage across pn-junction D1,
$I_{ref2}$ = current through pn-junction D2, and
$I_{ref1}$ = current through pn-junction D1.

Consequently the die temperature can be determined by dividing the measured voltage difference with a constant.

Both voltage differences ($V_{pn\_ntc}$ - $V_{pn1}$) and ($V_{pn2}$ - $V_{pn1}$) are digitized by an AD converter 104 and supplied to a processing unit 110 for further processing. The AD converter 104 could be a 16 bit AD-converter with 14 effective bits. A 16 bit AD-converter 104 is sufficient to digitize the voltage difference along the whole temperature and to provide enough resolution with respect to temperature. The processing unit 110 is arranged to process the digital signal values supplied from the AD-converter 104 and to calculate a value for a digital output signal representing the temperature measure by the non-linear sensor $R_{NTC}$. The processing unit 110 performs the following equation:

$$ratio = \frac{\left(V_{pn\_ntc} - V_{pn1}\right)}{\left(V_{pn2} - V_{pn1}\right)} \qquad\qquad [5]$$

wherein

ratio = a value indicative of the temperature

$V_{pn\_ntc}$ - $V_{pn1}$ = a digital signal value corresponding to the difference between the between the sensor signal input $V_{pn\_tc}$ and the first reference signal input $V_{pn2}$ ,and

$V_{pn2}$ - $V_{pn1}$ = a digital signal value corresponding to the difference between the second reference signal input $V_{pn2}$ and the first reference signal input $V_{pn1}$.

By applying the equations [2] and [3] in equation [5] we arrive at equation [6]:

$$ratio = \frac{\left(V_{pn\_ntc} - V_{pn1}\right)}{\left(V_{pn2} - V_{pn1}\right)} = \frac{\dfrac{kT}{q}\ln(\dfrac{I_{ntc}}{I_{ref1}})}{\dfrac{kT}{q}\ln(\dfrac{I_{ref2}}{I_{ref1}})} = \frac{\ln(I_{ntc}) - \ln(I_{ref1})}{\ln(I_{ref2}) - \ln(I_{ref1})} \qquad\qquad [6]$$

It can be seen from equation [6] that the value of *ratio* depends only on the temperature dependent variable current $I_{NTC}$ through the sensor and further the fixed currents $I_{ref1}$ and $I_{ref2}$, which are temperature independent. The value of *ratio* is a dimensionless number which only catches the NTC current, wherein the die temperature dependent parameters are completely removed. The value of *ratio* is indicative of the measured temperature and follows a curve similar to the curve of $V_{pn\_NTC}$ shown in figure 2. However, contrary to the curve of $V_{pn\_NTC}$ the curve of *ratio* is independent of the temperature of the pn-junctions of the circuitry. The curve of *ratio,* as shown in figure 2, has a non-linearity of 10 - 15%, which could be sufficient for some applications.

The curve of *ratio* could further be linearized by applying a polynomial equation to the calculated value of *ratio.* By applying a polynomial equation, a digital output signal can be calculated which sensitivity for a linear temperature change along the whole range of the measuring range is substantially constant. By means of a fourth order polynomial temp = $ax^4$+ $bx^3$+ $cx^2$+ $dx^1$+ e, wherein temp is a value indicative of the temperature, a, b, c, d and e are predetermined constant values and x corresponds to the value of *ratio*, a value for temp can be calculated with an accuracy smaller than 1°C over the whole temperature range from -40°C up to 200°C. Preferably, the calculated value for temp is in a digital format which corresponds to the measured temperature. If so, the arrangement for linearizing a non-linear sensor according to the invention can easily be connected to a display unit to show the actual temperature or other phenomenon without further processing the outputted data.

The voltages across the diodes $D_{NTC}$, D1 and D2 could be digitized by three different AD converters. In figure 1 only one differential AD converter 104 is provided to digitize the voltage differences ($V_{pn\_ntc}$ - $V_{pn1}$) and ($V_{pn2}$ - $V_{pn1}$). To enable this, a selector 106 is provided which switches under control of a control signal generated by a control signal generation unit 108 between the voltage across diode $D_{NTC}$ and diode D2. Furthermore, a chopper 102 is provided at the input of the AD converter 104. The chopper interchanges under control of a control signal generated by the control signal generation unit the input signal supplied to the AD converter 104. In this way a digital value for ($V_{pn\_ntc}$ - $V_{pn1}$) and ($V_{pn1}$ - $V_{pn\_ntc}$) is made available at the output of the AD converter 104. A bias drift in the digital signal values at the output of the AD converter can be eliminated in the processing unit 110 by determining the average value of ($V_{pn\_ntc}$ - $V_{pn1}$) and -($V_{pn1}$ - $V_{pn\_ntc}$) in processing unit 110. The same method will be applied for determining the digital values for ($V_{pn2}$ - $V_{pn1}$). The control signal generation unit 108 is arranged to generated appropriate control signals to the selector 106, chopper 102, AD converter 104 and processing unit 110, to synchronize the respective components.

It should be noted that equation [5] can be executed with sufficient accuracy when the analog values of the voltage differences ($V_{pn\_ntc}$ - $V_{pn1}$) and ($V_{pn2}$ - $V_{pn1}$) can be sampled with sufficient accuracy and the digitized value for ($V_{pn2}$ - $V_{pn1}$) corresponds to a value which allows the processing unit 110 to perform an accurate division. It has been found that the current through a standard thermistor $R_{NTC}$ is in a range from 500nA up to 3.2mA when 1V is applied across the thermistor. The first predefined current $I_{ref1}$ is preferably in the lower part of said range and the second predefined current $I_{ref2}$ is preferably in the upper part of said range. In an embodiment the first reference current $I_{ref1}$ is 50µA and the second reference current $I_{ref2}$ is 0,5mA.

Furthermore, the pn-junctions present in the conversion unit 101 and the first and second reference signal generators 105, 103 could be made by standard CMOS Mixed Mode processes.

The arrangement according to the invention can be applied in sensors for measuring one phenomenon. The arrangement could also be applied in sensors for measuring two or more phenomena. An example of such an sensor is a combined temperature pressure sensor.

Furthermore, in the embodiment of the invention described above, the exponential function of the NTC over the temperature range -40 - 200°C is linearized by the logarithmic conversion provided by the pn-junction and which is described by equation [1]. A person skilled in art would know how to adapt the conversion unit of arrangement to convert a signal having a characteristic that follows a curve in response to a linear change in a phenomenon in a predefined range, wherein the curve can be approximated by a logarithmic function in to a conversion unit that converts exponentially the logarithmic signal from the non-linear sensor to obtain a linearized converted signal that can be digitized by a linear AD-converter with sufficient resolution.

Several embodiments of the invention have been described above by way of exemplary embodiments. Various modifications and variations for the elements described with respect of these embodiments may be made by the skilled person without departing from the scope of the present invention, which is defined by the appended claims.

**Claims**

1. Arrangement for linearizing a non-linear sensor, the arrangement comprising:

   - a non-linear sensor ($R_{NTC}$) enabling to provide a signal having a characteristic that follows a curve in response to a linear change in a phenomenon in a predefined range, wherein the curve can be approximated by an exponential or logarithmic function; and
   - an analog conversion unit (101) to convert the signal from the non-linear sensor ($R_{NTC}$) to obtain a converted signal, wherein the conversion is a logarithmic or exponential function respectively; and linearize the exponential or logarithmic function of the non-linear sensor ($R_{NTC}$) in said predefined range;

   the conversion unit (101) comprises a pn-junction ($D_{NTC}$) and the conversion unit (101) is arranged to measure the current through the non-linear sensor ($R_{NTC}$) and to exchange said current into a current through the pn-junction ($D_{NTC}$), the current through the pn-junction ($D_{NTC}$) having a linear relationship with the current through the non-linear sensor ($R_{NTC}$) and the converted signal is the voltage across the pn-junction ($D_{NTC}$)
   **characterized in that**
   the arrangement further comprises:

   - an AD-converter (104) having an input to receive the converted signal and to digitize the converted signal to obtain a digital signal value
   - a first reference signal generator (105) arranged to generate a first reference signal wherein the first reference signal corresponds to the voltage across a pn-junction (D1), wherein the pn-junction (D1) matches the pn-junction ($D_{NTC}$) of the conversion unit (101) and a first predefined current is fed through said pn-junction (D1);
   - a second reference signal generator (103) arranged to generate a second reference signal wherein the second reference signal corresponds to the voltage across a pn-junction (D2), wherein the pn-junction (D2) matches the pn-junction ($D_{NTC}$) of the conversion unit and a second predefined current is fed through said pn-junction (D2); and wherein the AD-converter (104) comprises a first reference signal input coupled to the first reference signal generator (105) and a second reference signal input coupled to the second reference signal generator (103), the AD-converter (104) being arranged to generate digital signal values corresponding to the voltage difference between the sensor signal input $Vp_{n-ntc}$ and the first reference signal input $V_{pn1}$ ($V_{pn\_ntc} - V_{pn1}$) and the voltage difference between the second reference signal input $V_{pn2}$ and the first reference signal input $V_{pn1}$ ($V_{pn2} - V_{pn1}$).

2. Arrangement as claimed in claim 1, wherein the pn-junction ($D_{NTC}$) of the converter and pn-junctions (D1, D2) of the first and second reference signal generator (105, 103) are on the same die.

3. Arrangement as claimed in claim 1, wherein the AD-converter (104) is further arranged to generate digital signal values corresponding to the voltage difference between the first reference signal input $V_{pn1}$ and the sensor signal input $Vp_{n\_ntc}$ ($V_{pn1} - V_{pn-ntc}$) and the voltage difference between the first reference signal input $V_{pn1}$ and the second reference signal input $V_{pn2}$ ($V_{pn1} - V_{pn2}$).

4. Arrangement as claimed in any of the claims 1-3, wherein the arrangement further comprises a processing unit (110) arranged for processing the digital signal values to obtain a digital value representative for the phenomenon.

5. Arrangement as claimed in claim 3, wherein the processing unit (110) is arranged to perform the following equation:

$$ratio = \frac{\left(V_{pn\_ntc} - V_{pn1}\right)}{\left(V_{pn2} - V_{pn1}\right)}$$

wherein
ratio = a value indicative of the phenomenon,
$Vp_{n\_ntc}$- $V_{pn1}$ = a digital signal value corresponding to the difference between the sensor signal input $Vp_{n\_ntc}$ and the first reference signal input $V_{pn1}$, and
$V_{pn2}$- $V_{pn1}$ = a digital signal value corresponding to the difference between the second reference signal input $V_{pn2}$ and the first reference signal input $V_{pn1}$.

6. Arrangement as claimed in claim 5, wherein the processing unit (110) is arranged to calculate a value for a digital output signal representing the sensed phenomenon by applying the value of *ratio* to a polynomial equation in the digital domain to further linearize the curvature of the digital output signal in response to a linear change in the phenomenon in said predefined range.

7. Arrangement as claimed in any of the claims 1 -6, wherein the non-linear sensor ($R_{NTC}$) comprising a sensing element made of material which conductivity rises with increasing value for the phenomenon.

8. Arrangement as claimed in any of the claims 1-6, wherein the non-linear sensor ($R_{NTC}$) is an NTC thermistor.

9. Arrangement as claimed in any of the claims 1 -8, wherein the phenomenon is temperature.

10. Arrangement as claimed in claim 9, wherein the arrangement is arranged to generate a digital output signal that follows a linear curve in response to linear changes in temperature in a range of -40°C - 200°C.

**Patentansprüche**

1. Anordnung zum Linearisieren eines nicht-linearen Sensors mit:

- einem nicht-linearen Sensor ($R_{NTC}$), welcher ermöglicht, ein Signal bereitzustellen, welches eine Charakteristik aufweist, die in Antwort auf eine lineare Änderung in einem Phänomen in einem vordefinierten Bereich einer Kurve folgt, wobei die Kurve durch eine Exponentialfunktion oder eine logarithmische Funktion approximiert werden kann; und
- eine analoge Umwandlungseinheit (101), um das Signal von dem nicht-linearen Sensor ($R_{NTC}$) umzuwandeln, um ein umgewandeltes Signal zu erhalten, wobei die Umwandlung eine logarithmische Funktion bzw. eine Exponentialfunktion ist, und die Exponentialfunktion oder logarithmische Funktion des nicht-linearen Sensors ($R_{NTC}$) in dem vordefinierten Bereich zu linearisieren;

wobei die Umwandlungseinheit (101) einen pn-Übergang ($D_{NTC}$) aufweist und die Umwandlungseinheit (101) eingerichtet ist, den Strom durch den nicht-linearen Sensor ($R_{NTC}$) zu messen und den Strom in einen Strom durch den pn-Übergang ($D_{NTC}$) zu tauschen, wobei der Strom durch den pn-Übergang ($D_{NTC}$) eine lineare Beziehung zu dem Strom durch den nicht-linearen Sensor ($R_{NTC}$) aufweist und das umgewandelte Signal die Spannung über dem pn-Übergang ($D_{NTC}$) ist, **dadurch gekennzeichnet, dass** die Anordnung weiterhin aufweist:

- einen AD-Wandler (104) mit einem Eingang, um das umgewandelte Signal zu empfangen und das umgewandelte Signal zu digitalisieren, um einen digitalen Signalwert zu erhalten
- einen ersten Referenzsignalgenerator (105), welcher eingerichtet ist, ein erstes Referenzsignal zu erzeugen, wobei das erste Referenzsignal der Spannung über einem pn-Übergang (D1) entspricht, wobei der pn-Übergang (D1) dem pn-Übergang ($D_{NTC}$) der Umwandlungseinheit (101) entspricht und ein erster vordefinierter Strom durch den pn-Übergang (D1) geführt wird;
- einen zweiten Referenzsignalgenerator (103), welcher eingerichtet ist, ein zweites Referenzsignal zu erzeugen, wobei das zweite Referenzsignal der Spannung über einem pn-Übergang (D2) entspricht, wobei der pn-Übergang (D2) mit dem pn-Übergang ($D_{NTC}$) der Umwandlungseinheit abgeglichen ist und ein zweiter vordefinierter Strom durch den pn-Übergang (D2) geführt wird;

und wobei der AD-Wandler (104) einen ersten Referenzsignaleingang aufweist, welcher an den ersten Referenzsignalgenerator (105) gekoppelt ist und einen zweiten Referenzsignaleingang aufweist, welcher an den zweiten Referenzsignalgenerator (103) gekoppelt ist, wobei der AD-Wandler (104) eingerichtet ist, digitale Signalwerte zu erzeugen, welche den Spannungsdifferenzen zwischen dem Sensorsignaleingang $Vp_{n\_ntc}$ und dem ersten Referenzsignaleingang $V_{pn1}$ ($V_{pn\_ntc}$ - $V_{pn1}$) und den Spannungsdifferenzen zwischen dem zweiten Referenzsignaleingang $V_{pn2}$ und dem ersten Referenzsignaleingang $V_{pn1}$ ($V_{pn2}$ - $V_{pn1}$) entsprechen.

2.  Anordnung nach Anspruch 1, wobei der pn-Übergang ($D_{NTC}$) des Wandlers und die pn-Übergänge (D1, D2) der ersten und zweiten Referenzsignalgeneratoren (105, 103) auf demselben Chip angeordnet sind.

3.  Anordnung nach Anspruch 1, wobei der AD-Wandler (104) weiterhin eingerichtet ist, digitale Signalwerte zu erzeugen, welche dem Spannungsunterschied zwischen dem ersten Referenzsignaleingang $V_{pn1}$ und dem Sensorsignaleingang $V_{p\_ntc}$ ($V_{pn1}$ - $V_{pn\_ntc}$) und dem Spannungsunterschied zwischen dem ersten Bezugssignaleingang $V_{pn1}$ und dem zweiten Bezugssignaleingang $V_{pn2}$ ($V_{pn1}$ - $V_{pn2}$) entsprechen.

4.  Anordnung nach einem der Ansprüche 1 bis 3, wobei die Anordnung weiterhin eine Recheneinheit (110) aufweist, welche eingerichtet ist, die digitalen Signalwerte weiterzuverarbeiten, um einen Digitalwertrepräsentanten für das Phänomen zu erhalten.

5.  Anordnung nach Anspruch 3, wobei die Recheneinheit (110) eingerichtet ist, um die folgende Gleichung auszuführen:

$$ratio = \frac{(V_{pn\_ntc} - V_{pn1})}{(V_{pn2} - V_{pn1})},$$

wobei

ratio = ein für das Phänomen indikativer Wert ist,

$V_{pn\_ntc}$ - $V_{pn1}$ = ein digitaler Signalwert ist, welcher der Differenz zwischen dem Sensorsignaleingang $V_{pn\_ntc}$ und dem ersten Referenzsignaleingang $V_{pn1}$ entspricht und

$V_{pn2}$ - $V_{pn1}$ = ein digitaler Signalwert ist, welcher der Differenz zwischen dem zweiten Referenzsignaleingang $V_{pn2}$ und dem ersten Referenzsignaleingang $V_{pn1}$ entspricht.

6.  Anordnung nach Anspruch 5, wobei die Recheneinheit (110) eingerichtet ist, durch Anwenden des Wertes von *ratio* auf eine Polynomialgleichung im digitalen Bereich einen Wert für ein digitales Ausgangssignal zu berechnen, welches das wahrgenommene Phänomen darstellt, um die Krümmung des digitalen Ausgangssignals in Antwort auf eine lineare Änderung in dem Phänomen in dem vordefinierten Bereich weiter zu linearisieren.

7.  Anordnung nach einem der Ansprüche 1 bis 6, wobei der nicht-lineare Sensor ($R_{NTC}$) ein Sensorelement aufweist, welches aus einem Material gefertigt ist, dessen Leitfähigkeit mit steigendem Wert des Phänomens ansteigt.

8.  Anordnung nach einem der Ansprüche 1 bis 6, wobei der nicht-lineare Sensor ($R_{NTC}$) ein NTC-Thermistor ist.

9.  Anordnung nach einem der Ansprüche 1 bis 8, wobei das Phänomen eine Temperatur ist.

10. Anordnung nach Anspruch 9, wobei die Anordnung eingerichtet ist, ein digitales Ausgangssignal zu erzeugen, welches einer linearen Kurve in Antwort auf lineare Änderungen der Temperatur in einem Bereich von -40°C - 200 °C folgt.

**Revendications**

1.  Agencement pour la linéarisation d'un capteur non linéaire, l'agencement comprenant :

- un capteur non linéaire ($R_{NTC}$) permettant de fournir un signal ayant une caractéristique suivant une courbe en réponse à un changement linéaire d'un phénomène dans une plage prédéfinie, dans lequel la courbe peut être approximée par une fonction exponentielle ou logarithmique ; et
- une unité de conversion analogique (101) pour convertir le signal du capteur non linéaire ($R_{NTC}$) afin d'obtenir un signal converti, dans lequel la conversion est respectivement une fonction logarithmique ou exponentielle ; et linéariser la fonction exponentielle ou logarithmique du capteur non linéaire ($R_{NTC}$) dans ladite plage prédéfini ;

l'unité de conversion (101) comprend une jonction pn ($D_{NTC}$) et l'unité de conversion (101) est agencée pour mesurer le courant à travers le capteur non linéaire ($R_{NTC}$) et pour changer ledit courant en un courant à travers la jonction pn ($D_{NTC}$), le courant à travers la jonction pn ($D_{NTC}$) ayant une relation linéaire avec le courant à travers le capteur non linéaire ($R_{NTC}$) et le signal converti est la tension à travers la jonction pn ($D_{NTC}$) ;
**caractérisé en ce que**
l'agencement comprend en outre :

- un convertisseur analogique-numérique (104) ayant une entrée pour recevoir le signal converti et pour numériser le signal converti afin d'obtenir une valeur de signal numérique ;
- un générateur de premier signal de référence (105) agencé pour générer un premier signal de référence, dans lequel le premier signal de référence correspond à la tension à travers une jonction pn (D1), dans lequel la jonction pn (D1) correspond à la jonction pn ($D_{NTC}$) de l'unité de conversion (101) et un premier courant prédéfini est alimenté à travers ladite jonction pn (D1) ;
- un générateur de deuxième signal de référence (103) agencé pour générer un deuxième signal de référence, dans lequel le deuxième signal de référence correspond à la tension à travers une jonction pn (D2), dans lequel la jonction pn (D2) correspond à la jonction pn ($D_{NTC}$) de l'unité de conversion et un deuxième courant prédéfini est alimenté à travers ladite jonction pn (D2) ; et dans lequel le convertisseur analogique-numérique (104) comprend une entrée de premier signal de référence couplée au générateur de premier signal de référence (105) et une entrée de deuxième signal de référence couplée au générateur de deuxième signal de référence (103), le convertisseur analogique-numérique (104) étant agencé pour générer des valeurs de signaux numériques correspondant à la différence de tension entre l'entrée de signal de capteur $V_{pn\_ntc}$ et l'entrée de premier signal de référence $V_{pn1}$ ($V_{pn\_ntc}$-$V_{pn1}$) et à la différence de tension entre l'entrée de deuxième signal de référence $V_{pn2}$ et l'entrée de premier signal de référence $V_{pn1}$ ($V_{pn2}$- $V_{pn1}$).

2. Agencement selon la revendication 1, dans lequel la jonction pn ($D_{NTC}$) du convertisseur et les jonctions pn (D1, D2) des générateurs de premier signal de référence et de deuxième signal de référence (105, 103) sont sur la même puce.

3. Agencement selon la revendication 1, dans lequel le convertisseur analogique-numérique (104) est en outre agencé pour générer des valeurs de signaux numériques correspondant à la différence de tension entre l'entrée de premier signal de référence $V_{pn1}$ et l'entrée de signal de capteur $Vp_{n\_ntc}$ ($V_{pn1}$- $V_{pn\_ntc}$) et à la différence de tension entre l'entrée de premier signal de référence $V_{pn1}$ et l'entrée de deuxième signal de référence $V_{pn2}$ ($V_{pn1}$- $V_{pn2}$).

4. Agencement selon l'une quelconque des revendications 1 à 3, dans lequel l'agencement comprend en outre une unité de traitement (110) agencée pour traiter les valeurs de signaux numériques pour obtenir une valeur numérique représentative du phénomène.

5. Agencement selon la revendication 3, dans lequel l'unité de traitement (110) est agencée pour effectuer l'équation suivante :

$$rapport = \frac{\left(V_{pn\_ntc} - V_{pn1}\right)}{\left(V_{pn2} - V_{pn1}\right)}$$

où
rapport = une valeur indicative du phénomène,
$V_{pn\_ntc}$- $V_{pn1}$ = une valeur de signal numérique correspondant à la différence entre l'entrée de signal de capteur $V_{pn\_ntc}$ et l'entrée de premier signal de référence $V_{pn1}$, et
$V_{pn2}$- $V_{pn1}$ = une valeur de signal numérique correspondant à la différence entre l'entrée de deuxième signal de

référence $V_{pn2}$ et l'entrée de premier signal de référence $V_{pn1}$.

6. Agencement selon la revendication 5, dans lequel l'unité de traitement (110) est agencée pour calculer une valeur pour un signal de sortie numérique représentant le phénomène détecté en appliquant la valeur de rapport à une équation polynomiale dans le domaine numérique pour linéariser encore plus la courbure du signal de sortie numérique en réponse à un changement linéaire du phénomène dans ladite plage prédéfinie.

7. Agencement selon l'une quelconque des revendications 1 à 6, dans lequel le capteur non linéaire ($R_{NTC}$) comprend un élément de détection constitué d'un matériau dont la conductivité augmente avec l'augmentation de la valeur du phénomène.

8. Agencement selon l'une quelconque des revendications 1 à 6, dans lequel le capteur non linéaire ($R_{NTC}$) est une thermistance NTC.

9. Agencement selon l'une quelconque des revendications 1 à 8, dans lequel le phénomène est une température.

10. Agencement selon la revendication 9, dans lequel l'agencement est agencé pour générer un signal de sortie numérique qui suit une courbe linéaire en réponse à des changements linéaires de température dans une plage de -40°C à 200°C.

*Fig 1*

# *Fig 2*

# *Fig 3*

*Vpn_NTC*

**REFERENCES CITED IN THE DESCRIPTION**

**Patent documents cited in the description**

- US 5274577 A
- US 6099163 A
- US 4106341 A
- US 5116136 A
- WO 2006135977 A

**Non-patent literature cited in the description**

- **JAIN L.C.** Thermistor-Based linear temperature-to-voltage converter. *Measurement, Institute of measurement and control. London, GB,* 01 July 1989, vol. 7 (3), 132, 133